# EUROPÄISCHE PATENTSCHRIFT

(11) **EP 2 442 964 B1**
(45) Veröffentlichungstag und Bekanntmachung des Hinweises auf die Patenterteilung: **12.08.2015**
(21) Anmeldenummer: 10725644.8
(22) Anmeldetag: 27.05.2010
(51) Int. Cl.: B29C 65/08, B06B 3/00, B65B 51/22, B65B 51/30, B65B 9/06

(54) **ULTRASCHALLBEARBEITUNGSVORRICHTUNG SOWIE QUERSIEGELSONOTRODE HIERFÜR**
ULTRASONIC TREATMENT DEVICE AND TRANSVERSE SEALING SONOTRODE FOR THE SAME
DISPOSITIF DE TRAITEMENT PAR ULTRASONS, ET SONOTRODE POUR SCELLAGE TRANSVERSAL CORRESPONDANTE

(30) Priorität: 16.06.2009 DE 102009026952
(43) Veröffentlichungstag der Anmeldung: 25.04.2012
(73) Patentinhaber: Herrmann Ultraschalltechnik GmbH & Co. Kg, 76307 Karlsbad (DE)
(72) Erfinder: VOGLER, Ulrich, 88690 Uhldingen (DE)
(74) Vertreter: WSL Patentanwälte Partnerschaft mbB
(86) Internationale Anmeldenummer: PCT/EP2010/057362
(87) Internationale Veröffentlichungsnummer: WO 2010/145927

(56) Entgegenhaltungen:
- EP-A2- 0 894 612
- EP-A2- 1 815 966
- WO-A1-94/14583
- WO-A1-2008/102250
- JP-A- 2001 354 210
- US-A- 5 643 396
- US-A- 5 707 483
- US-A1- 2005 034 820
- US-A1- 2006 086 068

## Beschreibung

Die vorliegende Erfindung betrifft eine Vorrichtung zum kontinuierlichen Bearbeiten von Materialbahnen mit Ultraschall sowie eine Sonotrode hierfür.

Ultraschall ist eine mechanische Schwingung oberhalb der Hörgrenze. Der Frequenzbereich beginnt bei etwa 20 KHz und erstreckt sich bis zu Frequenzen von 1 GHz. Solche Ultraschallfrequenzen werden häufig mit Hilfe von piezoelektrischen Schallwandlern (Konverter) aus elektrischer Energie erzeugt. Diese mechanische Schwingungsenergie wird über die mit dem Konverter, gegebenenfalls über ein Amplitudentransformationsstück (auch Booster genannt) verbundene Sonotrode auf das Werkstück bzw. das zu bearbeitende Material aufgebracht.

Die Fläche der Sonotrode, die dafür vorgesehen ist, mit dem zu bearbeitenden Material in Kontakt zu treten, wird auch als Siegelfläche bezeichnet. Die Schwingeinheit besteht somit aus Generator, Konverter, gegebenenfalls dem Amplitudentransformationsstück und der Sonotrode. Für manche Anwendungsfälle sind Konverter und Sonotrode einstückig ausgebildet.

Um die Ultraschallschwingung mit Hilfe der Ultraschallschwingeinheit effektiv zu übertragen, ist es notwendig, die Ultraschallschwingeinheit in eine Resonanz zu bringen. Abhängig von dem Aufbau der Ultraschallschwingeinheit weist diese eine Vielzahl von Eigenfrequenzen auf. Nur wenn der Konverter eine Eigenfrequenz der Ultraschallschwingeinheit erzeugt, kommt es zu einer resonanten Schwingung der Ultraschallschwingeinheit. Daher müssen Konverter und Ultraschallschwingeinheit aufeinander abgestimmt werden.

Bei der Bearbeitung von Materialien mittels Ultraschall wird im Allgemeinen das zu bearbeitende Material zwischen der Sonotrode und einem (nicht zum Schwinggebilde gehörenden) Gegenwerkzeug, welches auch Amboss genannt wird, positioniert. Die mit dem zu bearbeitenden Material in Kontakt stehende Sonotrode überträgt dann die Ultraschallenergie auf das zu bearbeitende Material, welches dadurch beispielsweise verschweißt oder abgetrennt wird.

In der Verpackungstechnik kommen häufig sogenannte horizontale oder vertikale Schlauchbeutelverpackungsmaschinen zum Einsatz. Bei diesen wird eine Materialbahn von der Rolle gezogen, zu einem Schlauch geformt und die Längskante versiegelt. Danach wird der Beutel gefüllt, in Querrichtung gesiegelt und schließlich abgetrennt. Mit dem Schweißen der Quernaht entsteht daher sowohl die Kopfnaht des gefüllten als auch die Bodennaht des nächsten Beutels.

Bei den Schlauchbeutelverpackungsmaschinen werden häufig Ultraschallsonotroden zur Erzeugung der Längsnaht eingesetzt. Dabei werden die zu verbindenden Materialbahnen zwischen Sonotrode und Gegenwerkzeug kontinuierlich hindurchbewegt.

Zur Erstellung der Quersiegelnaht werden gegenwärtig meist Heißsiegelvorrichtungen eingesetzt. Neuerdings kommen jedoch vereinzelt auch Ultraschallverarbeitungsvorrichtungen zur Erstellung der Quersiegelnaht zum Einsatz. Dies sind meist jedoch diskontinuierlich arbeitende Sonotroden, d. h., die Sonotrode dreht sich nicht, sondern die im Wesentlichen rechteckige Siegelfläche wird periodisch zur Erzeugung der Quersiegelnaht mit der Materialbahn in Kontakt gebracht.

In der US 6,574,944 wurden bereits Rotationssonotroden zur Erzeugung einer Quersiegelnaht mittels Ultraschall vorgeschlagen. Bei der dort gezeigten Ausführungsform sind vier getrennte Sonotroden auf einer quaderförmigen Antriebswelle montiert. Wird die Antriebswelle in Rotation versetzt, so werden die vier Sonotroden nacheinander mit der Materialbahn in Kontakt gebracht und erzeugen jeweils eine Quersiegelnaht.

Die Ausführungsform mit vier auf einer Welle aufgebrachten Sonotroden ist jedoch aufwendig herzustellen. Zudem ist es nur mit hohem Energieeinsatz möglich, die Siegelflächen der vier Sonotroden über die Antriebswelle in Schwingung zu versetzen. Daher hat sich der in der US 6,574,944 gezeigte Aufbau in der Praxis nicht durchgesetzt.

Es ist daher Aufgabe der vorliegenden Erfindung, eine Sonotrode bzw. eine Ultraschallbearbeitungsvorrichtung mit einer Sonotrode bereitzustellen, die einfach herzustellen ist und eine zuverlässige Quersiegelnahterstellung gewährleistet, wobei der Energieverbrauch der Sonotrode gering ist. Zudem soll die Sonotrode eine hohe Rundlaufgenauigkeit und eine ausreichende Steifigkeit aufweisen.

Erfindungsgemäß wird diese Aufgabe durch eine Sonotrode gemäß Anspruch 1 gelöst.

Eine solche Sonotrode lässt sich leicht herstellen. So können beispielsweise aus einem stangenförmigen Material entsprechende Kavitäten ausgefräst werden, so dass lediglich die Stege bestehen bleiben und die Siegelfläche im Wesentlichen von der Umfangsfläche des stangenförmigen Materials gebildet werden. Daher sind die Stege vorzugsweise mit dem walzenförmigen Kern einstückig ausgebildet. Diese Maßnahme reduziert den Energieverlust bei der Anregung der Siegelfläche, da Übergangsverluste bei der Übertragung der Ultraschallschwingung von dem walzenförmigen Kern auf die Stege reduziert werden. Zudem werden durch den Verzicht auf die Verbindungsstellen die Montagetoleranzen reduziert, was insgesamt zu einer erhöhten Rundlaufgenauigkeit führt.

In einer bevorzugten Ausführungsform ist die Kontur der Siegelflächen in einem Schnitt senkrecht zur Walzenachse konvex gekrümmt, wobei der Krümmungsradius der Siegelflächen vorzugsweise in etwa dem Abstand der Siegelfläche von der Kernachse entspricht. Die konvexe Krümmung der Siegelfläche in einem Schnitt senkrecht zur Walzenachse verbessert die Rundlaufgenauigkeit der Sonotrode und damit die Qualität der herstellbaren Quersiegelnaht.

Es hat sich gezeigt, dass die Anregungsenergie, d. h. die Energie, die notwendig ist, die Siegelfläche in eine Schwingung gewünschter Frequenz und Amplitude zu versetzen, verringert werden kann, wenn der Abstand der Siegelflächen von der Kernachse um etwa 75 bis 100% größer ist als der Kernradius.

Weiterhin haben Versuche gezeigt, dass das Siegelergebnis verbessert werden kann, wenn die Siegelflächen in axialer Richtung, d. h. parallel zur Kernachse eine Länge / haben, wobei 0,4×λ≤ *l* ≤ 0,6×*λ*, wobei *λ* die Wellenlänge der Ultraschallschwingung der Sonotrode ist.

Es versteht sich, dass die Wellenlänge u. U. von der Richtung der Ausbreitung der Ultraschallschwingung in der Sonotrode abhängen kann. Auch wenn die Richtungsabhängigkeit im Allgemeinen vernachlässigbar ist, wird unter der Wellenlänge *λ* die Wellenlänge parallel zur Kernachse verstanden.

Es versteht sich, dass die Sonotrode effektiv nur in der Nähe ihrer Eigenfrequenz *f* betrieben werden kann, da sich nur dann eine stehende Welle ausbildet, d. h. die Sonotrode in der Lage ist, eine beträchtliche Energiemenge zu speichern, die beim Aufsetzen der Siegelfläche auf die Materialbahn in das zu bearbeitende Material übertragen werden kann. Die Schallgeschwindigkeit *c* hängt von dem Material ab, aus dem die Sonotrode gefertigt ist. Als besonders vorteilhaft hat sich die Verwendung von Aluminium, Titan oder Stahl erwiesen. Im Idealfall hat die Siegelfläche parallel zur Kernachse eine Länge I, die der halben Ultraschallwellenlänge entspricht.

Es hat sich jedoch herausgestellt, dass die Schwingungsamplitude der Siegelfläche in axialer Richtung von dem Zentrum der Siegelfläche in Richtung der Randbereiche abnimmt, so dass in den Randbereichen der Siegelfläche nur dann ein optimales Schweißergebnis erzielt wird, wenn der Energieeintrag erhöht wird, was jedoch zur Folge hat, dass im Bereich des Zentrums der Siegelfläche mehr Energie in die Materialbahn übertragen wird als zur Versiegelung notwendig ist. Dies kann einerseits zu einem erhöhten Energiebedarf und zum anderen sogar zu einer Verschlechterung des Siegelergebnisses führen, wenn zu viel Energie in die Materialbahn übertragen wird.

Um die Variation der Schwingungsamplitude in Längsrichtung der Siegelfläche zu verringern, d. h. den Abfall der Schwingungsamplitude vom Zentrum in Richtung der Randabschnitte in axialer Richtung zu reduzieren, ist es von Vorteil, wenn die Stege einen Verbindungsabschnitt und einen Siegelabschnitt, welcher die Siegelfläche trägt, aufweisen, wobei der Siegelabschnitt in axialer Richtung, d. h. in einer Richtung parallel zur Kernachse, zumindest einseitig und vorzugsweise beidseitig um eine Größe s ≤ 0 über den Verbindungsabschnitt vorspringt, wobei vorzugsweise 0,01×*λ*≤ *s* ≤ 0,2×*λ* ist. Mit anderen Worten steht die Siegelfläche in axialer Richtung über den Verbindungsabschnitt um etwa ein Hundertstel bis etwa ein Fünftel der Ultraschallwellenlänge über. Durch die spezielle Form der Stege wird die Variation der Ultraschallamplitude entlang der Siegelfläche deutlich reduziert.

In einer bevorzugten Ausführungsform schließen sich die Verbindungsabschnitte direkt an den walzenförmigen Kern ab. Mit Vorteil weisen Verbindungsabschnitte und Siegelabschnitte in einer Querschnittsansicht (Schnittebene senkrecht zur Kernachse) die gleiche Breite auf.

Bei einer weiteren bevorzugten Ausführungsform ist vorgesehen, dass der Abstand *d* der Siegelfläche von der Kernachse zwischen 40 und 60% der Ultraschallwellenlänge beträgt.

In einer besonders bevorzugten Ausführungsform weist die Siegelfläche eine parallel zur Kernachse verlaufende Nut auf. Diese Nut ist dafür vorgesehen, eine entsprechende Schneidvorrichtung, die an einem der Sonotrode zugeordneten Gegenwerkzeug angeordnet ist, aufzunehmen. Im Grunde genommen teilt die Nut die Siegelfläche in zwei Teilsiegelflächen, wobei die eine Teilsiegelfläche die Bodennaht einer ersten Verpackung und die andere Teilsiegelfläche die Kopfnaht einer anderen Verpackung erstellt, während eine entsprechende Schneidvorrichtung die benachbarten Verpackungen trennt. Durch das Vorsehen der Nut kann ein entsprechendes Schneidmesser leicht in die Nut eindringen und das Material trennen. Dadurch wird sowohl das Schneidmesser als auch die Siegelfläche geschont, da sie sich während des Schneidvorgangs nicht berühren. Alternativ wäre es zum Schutz der Siegelfläche auch möglich, eine eventuell vorgesehene Schutzbeschichtung in dem Bereich, in dem die Siegelfläche mit dem Schneidwerkzeug während des Schneidwerkzeuges in Berührung kommt, dicker auszuführen.

Alternativ dazu kann die Schneidvorrichtung auch in der Sonotrode angeordnet sein. In diesem Fall kann das Gegenwerkzeug eine entsprechende Nut aufweisen, in welche die Schneidvorrichtung der Sonotrode während des Schneidvorgangs eintauchen kann.

Die vorliegende Erfindung betrifft des weiteren eine Ultraschallbearbeitungseinrichtung zur kontinuierlichen Bearbeitung einer Materialbahn mittels Ultraschall mit einer Ultraschallschwingeinheit, bestehend aus einem Konverter und einer gegebenenfalls über ein Amplitudentransformationsstück mit diesem verbundene Sonotrode der beschriebenen Art und einem Gegenwerkzeug, wobei zur Bearbeitung einer Materialbahn dieses zwischen Sonotrode und Gegenwerkzeug geführt werden kann. Dabei ist die Kernachse senkrecht zur Materialvorschubrichtung angeordnet. Während der Ultraschallbearbeitung wird die Sonotrode um ihre Kernachse gedreht.

Wie bereits eingangs erläutert wurde, ist die Schwingungsamplitude, die sich an der Siegelfläche der Sonotrode ausbildet, nicht gleichmäßig entlang der Siegelfläche. Statt dessen ist die Schwingungsamplitude in etwa in der Mitte der Schwingungsfläche am größten, während sie in Axialrichtung, d. h. in einer Richtung parallel zur Walzenachse, in Richtung der Randbereiche kleiner wird. Um daher in den Randbereichen eine optimale Versiegelung zu gewährleisten, muss die zugeführte Energie und damit die Amplitude vergrößert werden, was jedoch zur Folge hat, dass im Bereich des Zentrums der Siegelfläche unnötig viel Energie übertragen wird.

Um die Siegelqualität entlang der gesamten Länge der Siegelfläche zu verbessern und zugleich die notwendige Energie zur Versiegelung einer Quersiegelnaht zu reduzieren, ist in einer besonderen Ausführungsform vorgesehen, dass eine zweite Sonotrode als Gegenwerkzeug verwendet wird, wobei vorzugsweise die zweite Sonotrode relativ zur ersten Sonotrode entlang der Kernachse um die Länge *v* verschoben ist, wobei vorzugsweise die Länge *v* = ¼×*λ* und *λ* die Wellenlänge der Ultraschallschwingung in der ersten Sonotrode ist. Dabei wird die zweite Sonotrode vorzugsweise mit der gleichen Frequenz in Schwingung versetzt wie die erste Sonotrode.

Durch die Verschiebung der ersten Sonotrode um etwa eine Viertel-Wellenlänge gegenüber der zweiten Sonotrode wird sichergestellt, dass der Bereich der Siegelfläche der ersten Sonotrode, welcher eine große Schwingungsamplitude zeigt, mit einem Bereich der Siegelfläche der zweiten Sonotrode in Kontakt tritt, bei welchem die Schwingungsamplitude relativ gering ist. Durch diese Maßnahme wird Energie entlang der Länge der Siegelflächen gleichmäßiger in die Materialbahn übertragen, wodurch einerseits das Siegelergebnis verbessert wird und andererseits Energie eingespart wird.

Die als Gegenwerkzeug arbeitende Sonotrode kann gegebenenfalls über einen Amplitudentransformator mit einem eigenen Konverter angeregt werden. Dabei sind vorzugsweise die Anregungen der beiden Sonotroden synchronisiert.

Alternativ dazu kann jedoch bei der als Gegenwerkzeug arbeitenden zweiten Sonotrode auf eine aktive Anregung verzichtet werden. Dadurch, dass die erste schwingende Sonotrode die Materialbahn zwischen ihrer Siegelfläche und der zweiten Sonotrode einklemmt, wird nämlich Energie nicht nur in die Materialbahn, sondern auch durch diese hindurch in die zweite Sonotrode übertragen, welche dadurch in Schwingung versetzt wird.

Weitere Merkmale, Vorteile und Anwendungsmöglichkeiten werden deutlich anhand der folgenden Beschreibung bevorzugter Ausführungsformen sowie der zugehörigen Figuren. Es zeigen:
- Figur 1: eine perspektivische Ansicht einer ersten Ausführungsform einer Sonotrode,
- Figur 2: eine Seitenansicht der Ausführungsform von Figur 1,
- Figur 3: eine perspektivische Ansicht der ersten Ausführungsform der Sonotrode mit Konverter,
- Figur 4: eine perspektivische Ansicht einer zweiten Ausführungsform einer Sonotrode,
- Figur 5: eine perspektivische Ansicht einer dritten Ausführungsform der Erfindung,
- Figur 6: eine perspektivische Ansicht der Ausführungsform von Figur 5 mit aufgeschrumpften Hülsen,
- Figur 7: eine Teilschnittansicht durch die Sonotrode der dritten Ausführungsform,
- Figur 8: eine Teilschnittansicht der dritten Ausführungsform der Sonotrode,
- Figur 9: eine schematische Detailskizze einer vierten Ausführungsform einer Sonotrode,
- Figur 10: eine schematische Skizze einer fünften Ausführungsform der Sonotrode,
- Figur 11: eine Querschnittsansicht der dritten Ausführungsform der Erfindung,
- Figur 12: eine Querschnittsansicht der ersten Ausführungsform,
- Figur 13: eine perspektivische Ansicht einer Ultraschallbearbeitungseinrichtung mit einer Sonotrode entsprechend der ersten Ausführungsform der Erfindung,
- Figur 14: eine perspektivische Detailansicht einer zweiten Ausführungsform der Ultraschallbearbeitungsvorrichtung,
- Figur 15: eine Seitenansicht einer dritten Ausführungsform einer Ultraschallbearbeitungseinrichtung,
- Figur 16: eine perspektivische Teilansicht der Ausführungsform von Figur 15,
- Figur 17: eine Seitenansicht der zweiten Ausführungsform der Sonotrode und
- Figur 18: eine Längsschnittansicht durch die Sonotrode gemäß Figur 17.

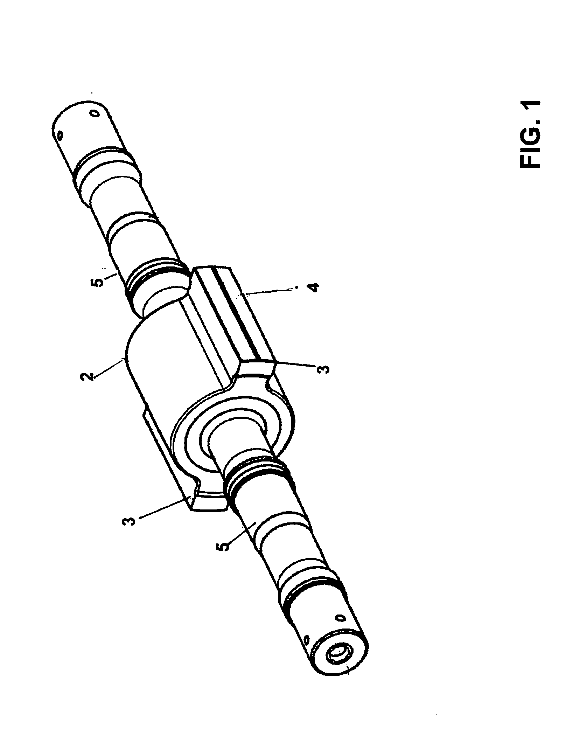

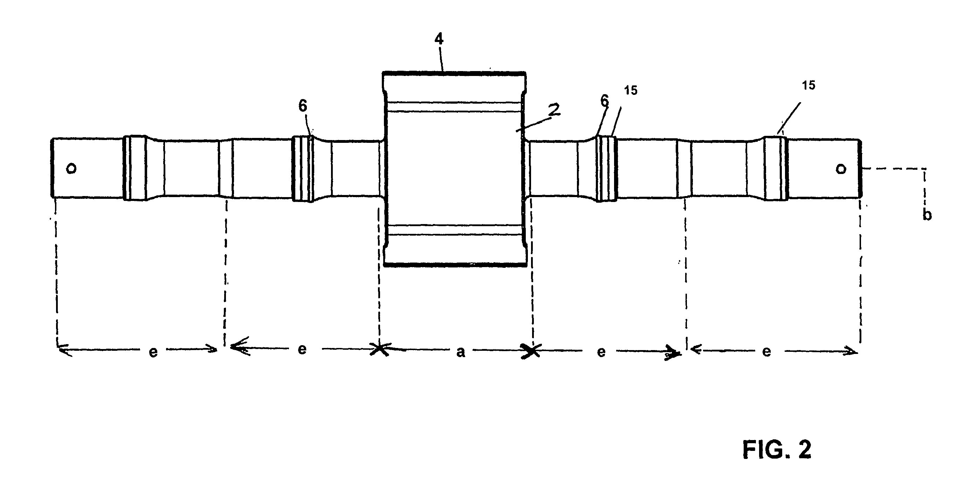

Figur 1 zeigt eine perspektivische Ansicht und Figur 2 eine Seitenansicht einer ersten Ausführungsform der erfindungsgemäßen Sonotrode.

An beiden Seiten der Sonotrode sind zwei Amplitudentransformatoren angeformt. Die Sonotrode weist einen im Wesentlichen walzenförmigen Kern 2 auf, an dem zwei radial gegenüberliegende Stege 3 angeformt sind, die sich über die Walzenoberfläche radial nach außen erstrecken. Die Stege 3 weisen jeweils eine Siegelfläche 4 auf, die im Betrieb mit der zu bearbeitenden Materialbahn in Kontakt treten soll. In axialer Richtung schließen sich an den walzenförmigen Kern 2 in beiden Richtungen jeweils ein Schaftabschnitt 5 an.

Die Sonotrode hat die Länge a. Beidseits schließen sich jeweils zwei Amplitudentransformatoren der Länge e an. Die Amplitudentransformatoren können einstückig mit der Sonotrode ausgebildet sein. Selbstverständlich kann auch nur ein Amplitudentransformator verwendet werden.

An einem der Amplitudentransformatoren kann dann in axialer Richtung ein Konverter angebracht werden. Im Betrieb dreht sich die Sonotrode um die Achse b. Durch den Konverter wird die Ultraschallschwingung in das gezeigte Gebilde übertragen, wobei sich die Ultraschallschwingung zunächst axial ausbreitet. Zusätzlich bildet sich jedoch eine radiale Ultraschallschwingung aus, die bei der gezeigten Ausführungsform zum Bearbeiten der Materialbahn verwendet wird. Man erkennt in Figur 2, dass bei der gezeigten Ausführungsform die Siegelfläche 4 in axialer Richtung, d. h. in einer Richtung parallel zur Drehachse b, beidseits etwas über den walzenförmigen Kern vorsteht. An den Schaftabschnitten der Sonotrode ist jeweils ein Flansch 6 vorgesehen, der zur Halterung der Sonotrode verwendet wird. Die Flansche 6 befinden sich in etwa in einem axialen Schwingungsknoten der Ultraschallschwingung, d. h., im Bereich der Flansche 6 findet im angeregten Zustand der Sonotrode nahezu keine Schwingung in Axialrichtung statt.

Bei der gezeigten Ausführungsform wird die Sonotrode über die beiden direkt hintereinander angeordneten Amplitudentransformatoren gehalten. Die beiden Amplitudentransformatoren tragen eine Halterung in Form einer Haltehülse 7, über welche die Ultraschallschwingeinheit an einem Gestell befestigt oder gelagert werden kann. Die Ultraschallschwingeinheit wird also nicht an einer einzigen Kontaktstelle ergriffen, sondern an zwei Kontaktstellen, wodurch höhere Haltekräfte und vor allem auch Biegekräfte übertragen werden können. Die Lagerung sollte als Drehlagerung ausgeführt sein, so dass sich die Sonotrode um ihre Längsachse b drehen kann. Die Vorrichtung besitzt bei optimaler Schwingungsentkopplung eine sehr hohe Biegesteifigkeit.

Die Haltehülsen 7 umgreifen jeweils zumindest teilweise die Amplitudentransformatoren. Dies bedeutet, dass die Befestigung der Ultraschallschwingeinheit nicht direkt durch Kontaktierung der Amplitudentransformatoren erfolgt, sondern dass die beiden Amplitudentransformatoren eine Haltehülse 7 tragen, welche dann gelagert wird. Dies hat den wesentlichen Vorteil, dass, insbesondere bei Drehlagerungen, die beiden Amplitudentransformatoren über eine einzige Lagerung gehalten werden, wodurch der bauliche Aufwand reduziert wird.

Vorzugsweise kontaktiert die Haltehülse 7 die beiden Amplitudentransformatoren jeweils im Bereich der Schwingungsknoten. Dadurch wird eine optimale Schwingungsentkopplung in axialer Richtung erzielt. Dabei weisen die beiden Amplitudentransformatoren im Bereich ihrer Schwingungsknoten vorteilhaft eine insbesondere umlaufende Kontaktfläche 15 für die Halterung auf. Dieser Schwingungsknoten ist im Amplitudentransformator relativ exakt bestimmbar und daher kann die Kontaktfläche genau positioniert werden. Außerdem ist eine derartige Kontaktfläche relativ einfach herstellbar. Die beiden Amplitudentransformatoren können diskret als zwei Bauteile, jedoch auch als ein einziges Bauteil ausgeführt sein.

Um eine exakte Positionierung der Halterung an den Amplitudentransformatoren zu ermöglichen, ist vorgesehen, dass wenigstens einer der Amplitudentransformatoren angrenzend an die Kontaktfläche einen umlaufenden Flansch 6 aufweist, an welchem die Halterung axial anliegt. Auf diese Weise wird sichergestellt, dass die Halterung bezüglich der Amplitudentransformatoren ihre korrekte Lage einnimmt und dass durch den Flansch zudem ein Verschieben der Halterung auf den Amplitudentransformatoren verhindert wird. Eine Entkopplung in radialer Richtung wird durch die Haltehülse erreicht, so dass das Rohrstück in dessen Mitte gegriffen werden kann. Dieser Angriffs- und Lagerpunkt schwingt weder in radialer noch in axialer Richtung.

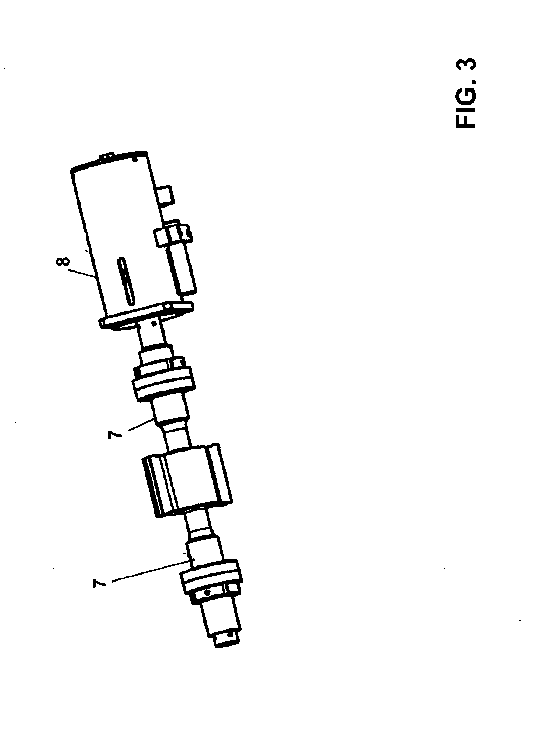

In Figur 3 ist eine perspektivische Ansicht der Sonotrode der Figuren 1 und 2 gezeigt, wobei hier jetzt zusätzlich Haltehülsen 7 angebracht sind, welche die Sonotrode an den Flanschen 6 greifen. Zusätzlich ist ein Konverter 8 vorgesehen, mit dessen Hilfe die Ultraschallschwingung in die Sonotrode übertragen wird.

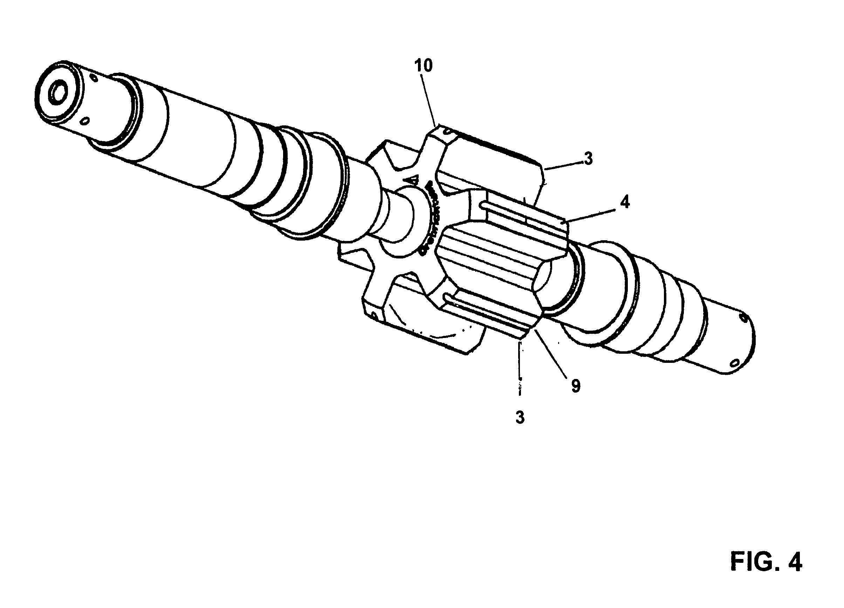

Figur 4 zeigt eine perspektivische Ansicht einer zweiten Ausführungsform der erfindungsgemäßen Sonotrode. Hierbei weist die Sonotrode insgesamt 6 radial in Umfangsrichtung gleich beabstandete Stege 3 auf. Die durch die Stege 3 bereitgestellten Siegelflächen 4 weisen bei der gezeigten Ausführungsform eine parallel zur Drehachse verlaufende Nut 9 auf. Die Nut 9 dient zur Aufnahme eines am Gegenwerkzeug aufgenommenen Schneidwerkzeuges, so dass mit der gezeigten Sonotrode sowohl die Kopfnaht einer ersten Verpackung, die Bodennaht der sich daran anschließenden zweiten Verpackung sowie der Schnitt zwischen der ersten und zweiten Verpackung durchgeführt werden kann.

Die Siegelflächen 4 weisen an ihren Enden jeweils eine Abfasung 10 auf.

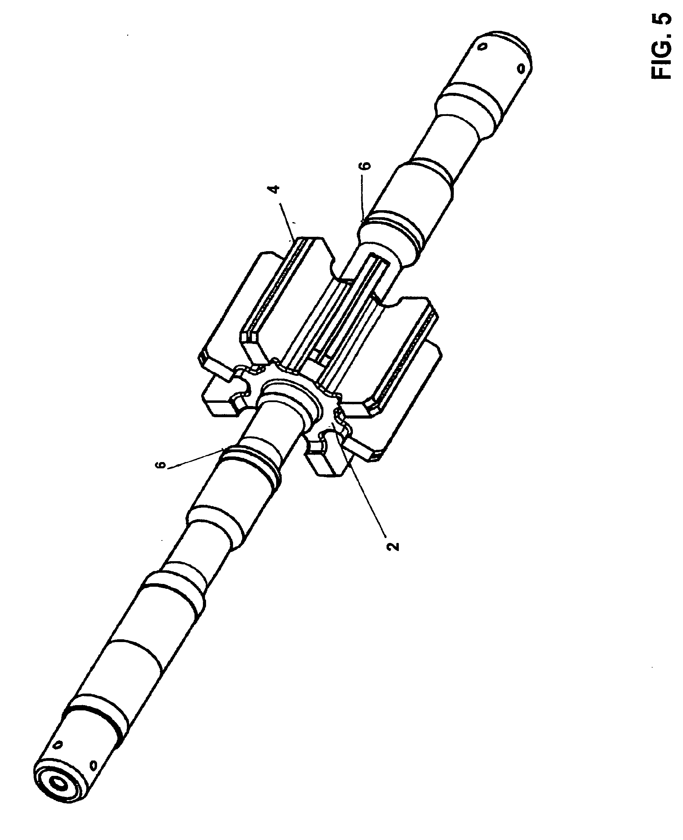

In Figur 5 ist eine perspektivische Ansicht einer dritten Ausführungsform der Sonotrode gezeigt. Die in Figur 5 gezeigte Ausführungsform unterscheidet sich von der in Figur 4 gezeigten Ausführungsform im Wesentlichen dadurch, dass die Siegelflächen 4 in Axialrichtung, d. h. in einer Richtung parallel zur Drehachse, über den walzenförmigen Kern 2 um eine Länge s beidseits vorstehen. Im Grunde genommen bestehen die Stege aus einem Verbindungsabschnitt und einem Siegelabschnitt, welcher die Siegelfläche aufweist, wobei der Siegelabschnitt in Richtung der Kernachse über den Verbindungsabschnitt vorspringt.

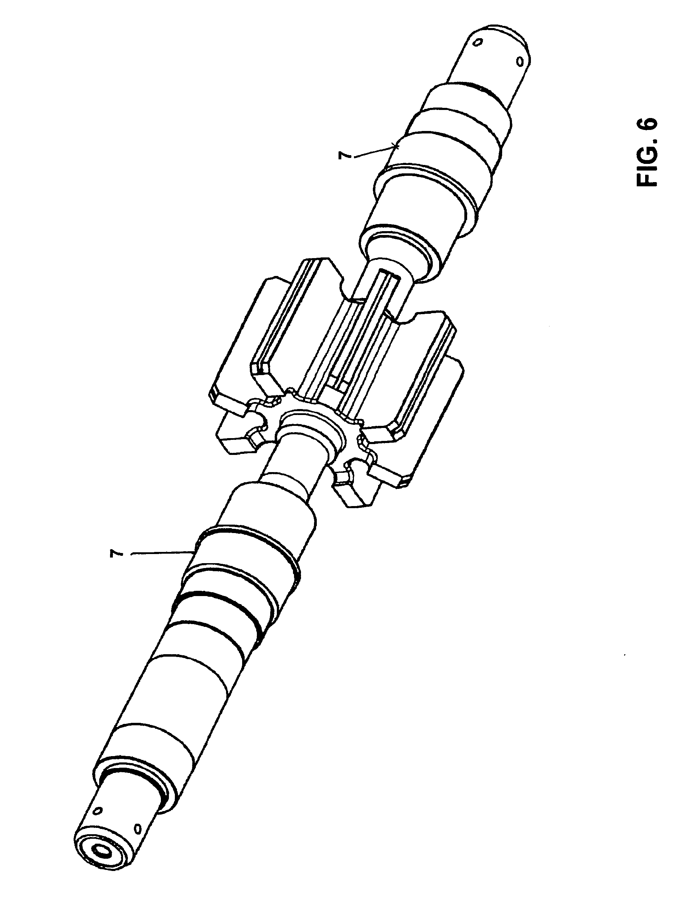

Figur 6 entspricht der Darstellung von Figur 5, wobei hier zusätzlich Verbindungshülsen 7 dargestellt sind, die mit den Flanschen 6 in Eingriff treten.

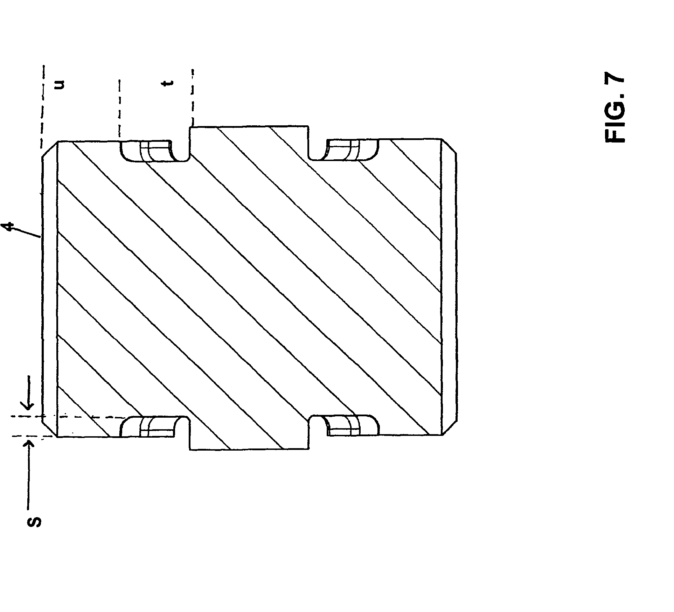

Figur 7 zeigt einen Teillängsschnitt durch die Ausführungsform von Figur 5. Man erkennt hier, dass die Stege in einen Verbindungsabschnitt der Länge t und einen Siegelabschnitt u unterteilt sind. In Axialrichtung steht der Siegelabschnitt um die Länge s über den Verbindungsabschnitt vor. Diese Maßnahme dient dazu, eine möglichst gleichmäßige Schwingungsamplitude im Bereich der Siegelfläche 4 zu erzielen.

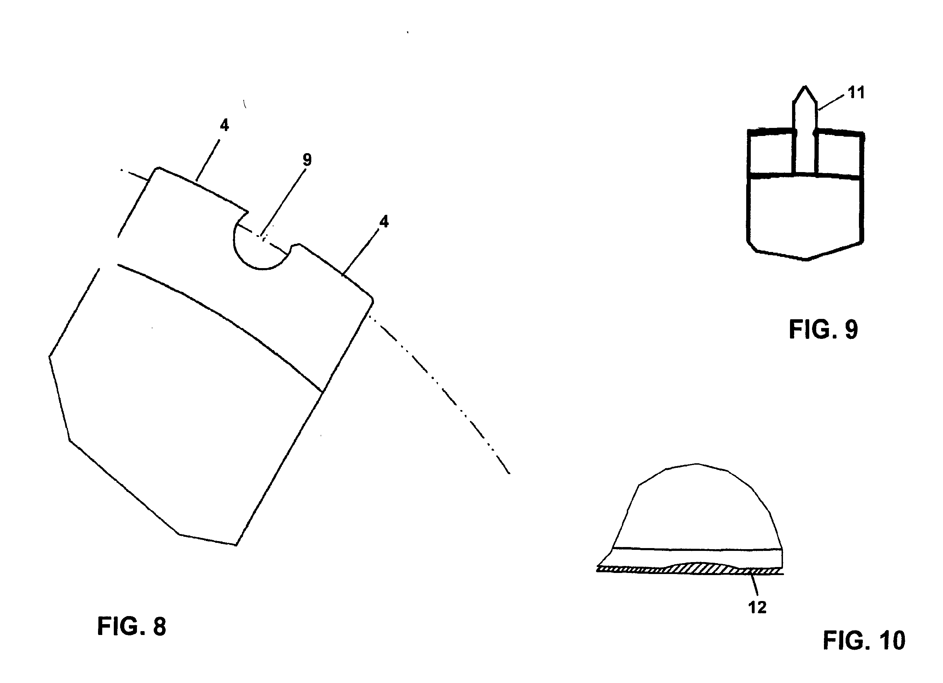

Figur 8 zeigt einen Teilquerschnitt durch die Sonotrode gemäß der Ausführungsformen 2 und 3. Man erkennt, dass die Siegelfläche 4 durch eine in Achsrichtung verlaufende Nut 9 unterteilt ist. Zudem ist zu erkennen, dass die Siegelfläche in einer Schnittansicht senkrecht zur Kernachse konvex gekrümmt ist, wobei der Krümmungsradius im Wesentlichen dem Abstand zwischen der Siegelfläche 4 und der Kernachse entspricht. Selbstverständlich ist es möglich, die Siegelfläche 4 zu beschichten.

Figur 9 zeigt eine schematische Darstellung, in der in der Nut 9 ein Schneidwerkzeug 11 eingelassen ist. Das Schneidwerkzeug wird vorzugsweise ebenfalls mit der Ultraschallschwingung beaufschlagt, um die zu bearbeitende Materialbahn leicht zu durchtrennen. Die Befestigung des Schneidwerkzeuges in der Nut kann beispielsweise mit Hilfe einer Klemmpassung, durch Verkleben oder durch Verschrauben erfolgen.

Figur 10 zeigt ein Beispiel für eine Beschichtung 12. Dabei kann die Beschichtung 12 in dem Bereich, in dem das Schneidwerkzeug die Sonotrode trifft, dicker ausgeführt sein, wenn die Siegelfläche keine Nut aufweist.

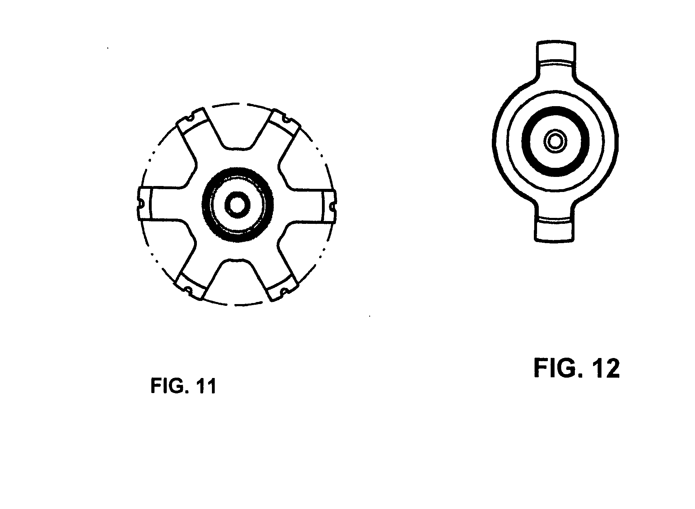

In den Figuren 11 und 12 sind Querschnittsansichten der ersten und dritten Ausführungsform der Sonotrode gezeigt. Die Stege sind in Umfangsrichtung gleich beabstandet, so dass sich immer zwei Stege radial gegenüberstehen, wenn eine gerade Anzahl von Stegen gewählt wird.

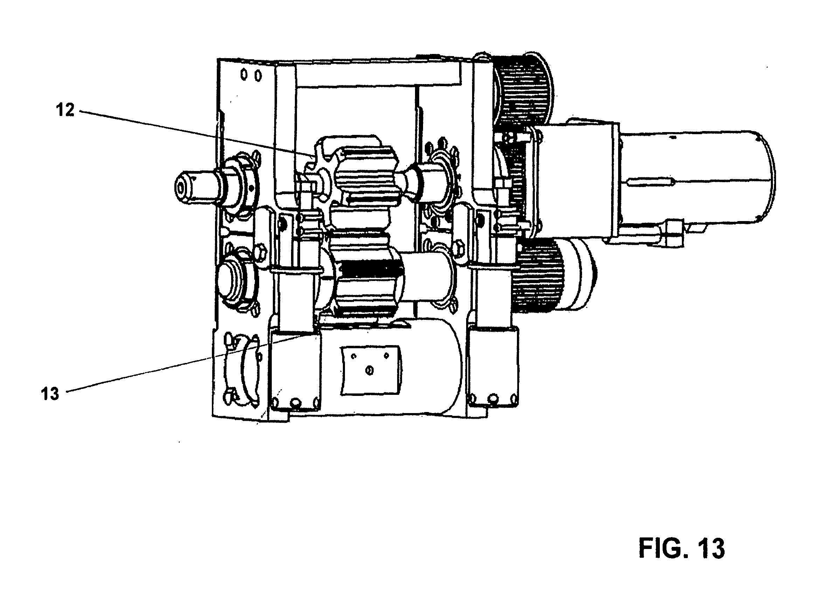

Figur 13 zeigt eine perspektivische Ansicht einer Ultraschallbearbeitungseinrichtung. Diese Ultraschallbearbeitungseinrichtung dient zum Herstellen von Quersiegelnähten, zum Beispiel in einer horizontalen Schlauchbeutelverpackungsmaschine. Zum Verpacken des entsprechenden Verpackungsgutes wird die Materialbahn zwischen der erfindungsgemäßen Sonotrode 12 und einem entsprechenden Gegenwerkzeug 13 entlang bewegt. Auch das Gegenwerkzeug 13 weist in der gezeigten Ausführungsform stegartige Abschnitte auf. Immer dann, wenn der Siegelabschnitt der Sonotrode 12 auf eine entsprechende Stegfläche des Gegenwerkzeuges 3 trifft, wird eine Quersiegelnaht erzeugt. Die zwischen den einzelnen Stegen gebildeten Hohlräume, deren Größe durch den walzenförmigen Kern begrenzt wird, dienen der Aufnahme des Verpackungsgutes.

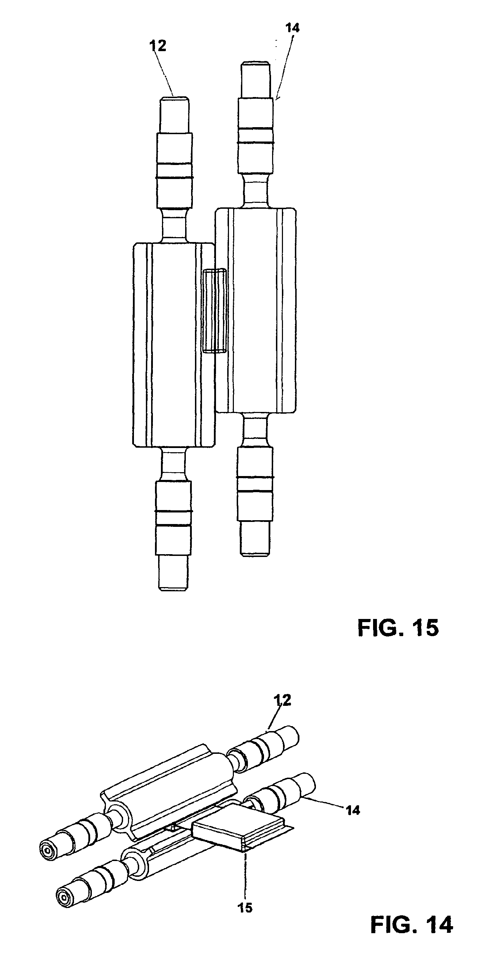

Figur 14 zeigt eine schematische Darstellung der Funktionsweise einer alternativen Ausführungsform. Hier wird die zu bearbeitende Materialbahn zwischen einer Sonotrode 12, die der ersten Ausführungsform entspricht und einem Gegenwerkzeug 14, das hier ebenfalls als Sonotrode ausgebildet ist, hindurchbewegt. Man erkennt, dass dann, wenn die beiden Siegelflächen der beiden Sonotroden aufeinandertreffen, die Quersiegelnaht ausgebildet wird.

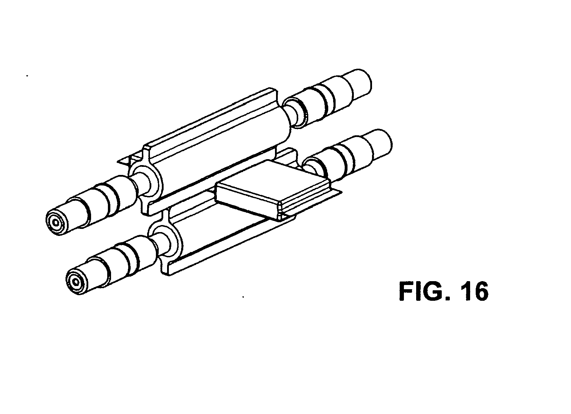

Da sich in Axialrichtung, d. h. in einer Richtung parallel zur Kernachse, im Allgemeinen eine inhomogene Schwingungsamplitude an der Schweißfläche ausbildet, ist in der in den Figuren 15 und 16 dargestellten alternativen Ausführungsform vorgesehen, dass die als Gegenwerkzeug dienende Sonotrode 14 gegenüber der ersten Sonotrode 12 in Axialrichtung verschoben ist. Im Idealfall entspricht die Verschiebung in etwa einer Viertelwellenlänge der Ultraschallschwingung.

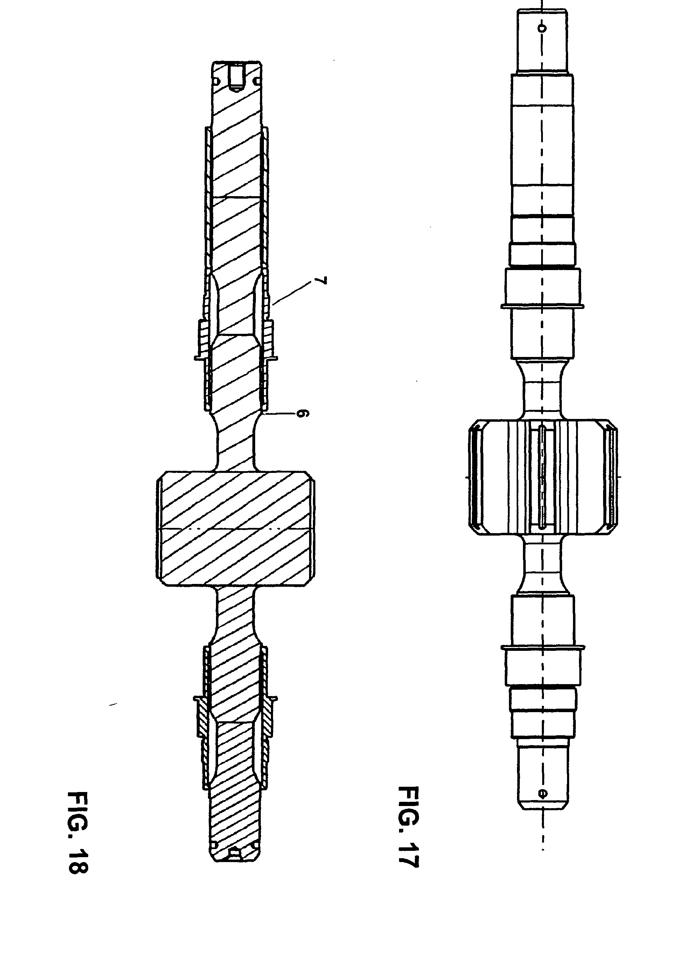

In den Figuren 17 und 18 ist eine Seitenansicht (Figur 17) sowie eine Längsschnittansicht (Figur 18) der Sonotrode gemäß der zweiten Ausführungsform gezeigt. In dieser Darstellung ist deutlich zu erkennen, dass die Hülsen 7 an den Flanschen 6 und den Kontaktflächen 15 der Sonotrode angreifen. Zur Befestigung der Hülsen 7 an den Amplitudentransformatoren können die Hülsen 7 beispielsweise auf die Amplitudentransformatoren aufgeschrumpft werden. Alternativ dazu können sie auch aufgelötet werden oder auf andere Weise verbunden werden.

### Bezugszeichenliste

- 1: Ultraschallbearbeitungsvorrichtung
- 2: Kern
- 3: Stege
- 4: Siegelfläche
- 5: Schaftabschnitt
- 6: Flansche
- 7: Haltehülsen
- 8: Konverter
- 9: Nut
- 10: Abfasung
- 11: Schneidwerkzeug
- 12: Sonotrode
- 13: Gegenwerkzeug
- 14: Gegenwerkzeug (Sonotrode)
- 15: Kontaktfläche

- b: Rotationsachse

## Patentansprüche

1. Sonotrode für eine Vorrichtung zum kontinuierlichen Bearbeiten von Materialbahnen mittels Ultraschall, wobei die Sonotrode aus einem im Wesentlichen walzenförmigen Kern und mindestens zwei Stegen besteht, wobei die Stege sich in Richtung der Kernachse erstrecken und jeweils eine dem walzenförmigen Kern abgewandte Siegelfläche aufweisen, **dadurch gekennzeichnet, dass** der Abstand der Siegelfläche von der Kernachse um etwa 75 bis 100% größer ist als der Kemradius.

2. Sonotrode nach Anspruch 1, **dadurch gekennzeichnet, dass** die Stege einstückig mit dem walzenförmigen Kern ausgebildet sind.

3. Sonotrode nach Anspruch 1 oder 2, **dadurch gekennzeichnet, dass** die Kontur der Siegelflächen in einem Schnitt senkrecht zur Walzenachse konvex gekrümmt ist, wobei der Krümmungsradius der Siegelflächen vorzugsweise in etwa dem Abstand der Siegelfläche von der Kernachse entspricht.

4. Sonotrode nach einem der Ansprüche 1 bis 3, **dadurch gekennzeichnet, dass** die Sonotrode eine Eigenfrequenz f im Bereich zwischen 20 kHz und 1 GHz hat und die Siegelflächen in Richtung der Kernachse eine Länge I haben, wobei 0,4 × *λ* ≤ *l* ≤ 0,6 × *λ* mit der Wellenlänge *λ* der Ultraschallschwingung der Sonotrode.

5. Sonotrode nach einem der Ansprüche 1 bis 3, **dadurch gekennzeichnet, dass** die Sonotrode eine Eigenfrequenz f im Bereich zwischen 20 kHz und 1 GHz hat und die Stege einen Verbindungsabschnitt und einen Siegelabschnitt mit der Siegelfläche aufweisen, wobei der Siegelabschnitt in Richtung der Kernachse zumindest einseitig und vorzugsweise beidseitig um eine Größe s > 0 über den Verbindungsabschnitt vorspringt, wobei vorzugsweise 0,01 × *λ* ≤ *s* ≤ 0,2 *× λ,* ist, wobei *λ* die Wellenlänge der Ultraschallwelle innerhalb der Sonotrode ist.

6. Sonotrode nach einem der Ansprüche 1 bis 5, **dadurch gekennzeichnet, dass** die Siegelfläche eine parallel zur Kernachse verlaufende Nut aufweist.

7. Sonotrode nach einem der Ansprüche 1 bis 6, **dadurch gekennzeichnet, dass** die Siegelfläche eine parallel zur Kernachse verlaufende Schneidvorrichtung aufweist.

8. Ultraschallbearbeitungseinrichtung zur kontinuierlichen Bearbeitung einer Materialbahn mittels Ultraschall mit einer Ultraschallschwingeinheit bestehend aus einem Konverter und einer gegebenenfalls über ein Amplitudentransformationsstück mit diesem verbundene Sonotrode nach einem der Ansprüche 1 bis 7 und einem Gegenwerkzeug, wobei zur Bearbeitung einer Materialbahn diese zwischen Sonotrode und Gegenwerkzeug geführt werden kann.

9. Ultraschallbearbeitungseinrichtung nach Anspruch 8, **dadurch gekennzeichnet, dass** eine zweite Sonotrode nach einem der Ansprüche 1 bis 7 vorgesehen ist, welche als Gegenwerkzeug verwendet wird, wobei vorzugsweise die zweite Sonotrode relativ zur ersten Sonotrode entlang der Kernachse um die Länge v verschoben ist, wobei vorzugweise die Länge *v* = 0,25 × *λ*, wobei *λ* die Wellenlänge der Ultraschallschwingung innerhalb der ersten Sonotrode ist.

10. Ultraschallbearbeitungseinrichtung nach Anspruch 9, **dadurch gekennzeichnet, dass** eine Synchronisationseinrichtung vorgesehen ist, welche die Ultraschallschwingung der als Gegenwerkzeug arbeitenden zweite Sonotrode mit der Ultraschallschwingung der ersten Sonotrode synchronisiert.

11. Ultraschallbearbeitungseinrichtung nach Anspruch 9 oder 10, **dadurch gekennzeichnet, dass** die als Gegenwerkzeug arbeitende zweite Sonotrode nicht aktiv angeregt wird.

## Claims

1. A sonotrode for a device for continuously processing material webs by means of ultrasound, wherein the sonotrode comprises a substantially roller-shaped core and at least two bars, wherein the bars extend in the direction of the core axis and each have a sealing surface facing away from the roller-shaped core, **characterized in that** the spacing of the sealing surface from the core axis is greater than the core radius by between about 75 and 100 %.

2. A sonotrode as set forth in claim 1 **characterized in that** the bars are formed integrally with the roller-shaped core.

3. A sonotrode as set forth in claim 1 or claim 2 **characterized in that** the contour of the sealing surfaces in a section perpendicular to the roller axis is convexly curved, wherein the radius of curvature of the sealing surfaces preferably approximately corresponds to the spacing of the sealing surface from the core axis.

4. A sonotrode as set forth in one of claims 1 through 3 **characterized in that** the sonotrode has a natural frequency f in the range of between 20 kHz and 1 GHz and the sealing surfaces are of a length I in the direction of the core axis, wherein 0.4 x λ ≤ l ≤ 0.6 x λ with the wavelength λ of the ultrasonic oscillation of the sonotrode.

5. A sonotrode as set forth in one of claims 1 through 3 **characterized in that** the sonotrode has a natural frequency f in the range of between 20 kHz and 1 GHz and the bars have a connecting portion and a sealing portion with the sealing surface, wherein the sealing portion projects in the direction of the core axis and preferably at both sides by a value s > 0 beyond the connecting portion, wherein preferably 0.01 x λ ≤ s ≤ 0.2 x λ, wherein λ is the wavelength of the ultrasonic wave within the sonotrode.

6. A sonotrode as set forth in one of claims 1 through 5 **characterized in that** the sealing surface has a groove extending parallel to the core axis.

7. A sonotrode as set forth in one of claims 1 through 6 **characterized in that** the sealing surface has a cutting device extending parallel to the core axis.

8. An ultrasonic processing device for continuously processing a material web by means of ultrasound with an ultrasonic oscillating unit comprising a converter and a sonotrode connected thereto optionally by way of an amplitude transformation portion, as set forth in one of claims 1 through 7, and a counterpart tool, wherein for processing a material web it can be guided between the sonotrode and the counterpart tool.

9. An ultrasonic processing device as set forth in claim 8 **characterized in that** there is provided a second sonotrode as set forth in one of claims 1 through 7 which is used as a counterpart tool, wherein preferably the second sonotrode is displaced relative to the first sonotrode along the core axis by the length v, wherein preferably the length v = 0.25 x λ, wherein λ is the wavelength of the ultrasonic oscillation within the first sonotrode.

10. An ultrasonic processing device as set forth in claim 9 **characterized in that** there is provided a synchronization device which synchronizes the ultrasonic oscillation of the second sonotrode operating as the counterpart tool with the ultrasonic oscillation of the first sonotrode.

11. An ultrasonic processing device as set forth in claim 9 or claim 10 **characterized in that** the second sonotrode operating as the counterpart tool is not actively excited.

## Revendications

1. Sonotrode pour dispositif servant à l'usinage en continu de bandes de matériau au moyen d'ultrasons, où la sonotrode est constituée d'un noyau sensiblement cylindrique et d'au moins deux tiges, les tiges s'étendant en direction de l'axe du noyau et présentant chacune une surface de scellage opposée au noyau cylindrique,
**caractérisée en ce que** la distance entre la surface de scellage et l'axe du noyau est supérieure d'environ 75 à 100 % au rayon du noyau.

2. Sonotrode selon la revendication 1, **caractérisée en ce que** les tiges sont réalisées d'une seule pièce avec le noyau cylindrique.

3. Sonotrode selon la revendication 1 ou 2, **caractérisée en ce que** le contour des surfaces de scellage présente, dans une coupe perpendiculaire à l'axe du cylindre, une courbure convexe, le rayon de courbure des surfaces de scellage correspondant de préférence sensiblement à la distance qui sépare la surface de scellage de l'axe du noyau.

4. Sonotrode selon l'une des revendications 1 à 3, **caractérisée en ce que** la sonotrode a une fréquence propre *f* dans la gamme comprise entre 20 kHz et 1 GHz et **en ce que** les surfaces de scellage dans la direction de l'axe du noyau ont une longueur *l*, où 0,4 x λ ≤ *l* ≤ 0,6 x λ, *λ* étant la longueur d'onde de la vibration ultrasonore de la sonotrode.

5. Sonotrode selon l'une des revendications 1 à 3, **caractérisée en ce que** la sonotrode a une fréquence propre *f* dans la gamme comprise entre 20 kHz et 1 GHz et **en ce que** les tiges présentent une partie de raccordement et une partie de scellage avec la surface de scellage, la partie de scellage faisant saillie de la partie de raccordement dans la direction de l'axe du noyau au moins d'un côté, et de préférence des deux côtés, d'une grandeur s > 0, de préférence 0,01 x λ ≤ s ≤ 0,2 x λ, λ étant la longueur de l'onde ultrasonore à l'intérieur de la sonotrode.

6. Sonotrode selon l'une des revendications 1 à 5, **caractérisée en ce que** la surface de scellage présente une rainure parallèle à l'axe du noyau.

7. Sonotrode selon l'une des revendications 1 à 6, **caractérisée en ce que** la surface de scellage présente un dispositif de coupe s'étendant parallèlement à l'axe du noyau.

8. Dispositif d'usinage par ultrasons destiné à l'usinage en continu d'une bande de matériau au moyen d'ultrasons, comportant une unité émettrice d'ultrasons composée d'un convertisseur et d'une sonotrode selon l'une des revendications 1 à 7 éventuellement reliée à celui-ci par l'intermédiaire d'un dispositif transformateur d'amplitude, ainsi que d'un contre-outil, la bande de matériau pouvant être guidée entre la sonotrode et le contre-outil pour être usinée.

9. Dispositif d'usinage par ultrasons selon la revendication 8, **caractérisé en ce qu'**est prévue une seconde sonotrode selon l'une des revendications 1 à 7, laquelle sert de contre-outil, la seconde sonotrode étant de préférence décalée par rapport à la première sonotrode de la longueur *v* le long de l'axe du noyau, la longueur *v* étant de préférence talle que *v* = 0,25 x λ, λ étant la longueur d'onde de la vibration ultrasonore à l'intérieur de la première sonotrode.

10. Dispositif d'usinage par ultrasons selon la revendication 9, **caractérisé en ce qu'**est prévu un dispositif de synchronisation qui synchronise la vibration ultrasonore de la seconde sonotrode servant de contre-outil avec la vibration ultrasonore de la première sonotrode.

11. Dispositif d'usinage par ultrasons selon la revendication 9 ou 10, **caractérisé en ce que** la seconde sonotrode servant de contre-outil n'est pas excitée de manière active.
